(19) **Europäisches Patentamt**
**European Patent Office**
**Office européen des brevets**

(11) **EP 2 884 110 B1**

(12) **FASCICULE DE BREVET EUROPEEN**

(45) Date de publication et mention
de la délivrance du brevet:
**27.02.2019 Bulletin 2019/09**

(51) Int Cl.:
**F04D 15/00** *(2006.01)*    **F04D 15/02** *(2006.01)*

(21) Numéro de dépôt: **14193390.3**

(22) Date de dépôt: **17.11.2014**

(54) **PROCÉDÉ DE COMMANDE POUR MINIMISER LA CONSOMMATION D'ÉNERGIE ÉLECTRIQUE D'UN ÉQUIPEMENT DE POMPAGE**

Steuerverfahren zur Minimierung des elektrischen Energieverbrauchs einer Pumpenanlage

Control process to minimise electrical energy consumption of a pump equipment

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2013 FR 1362645**

(43) Date de publication de la demande:
**17.06.2015 Bulletin 2015/25**

(73) Titulaire: **Schneider Toshiba Inverter Europe SAS**
**27120 Pacy sur Eure (FR)**

(72) Inventeurs:
• **Malrait, François**
**27120 Jouy sur Eure (FR)**
• **Ejjabraoui, Kamal**
**92506 Rueil Malmaison cedex (FR)**

(74) Mandataire: **Dufresne, Thierry et al**
**Schneider Electric Industries SAS**
**Service Propriété Industrielle**
**35 rue Joseph Monier - CS 30323**
**92506 Rueil-Malmaison Cedex (FR)**

(56) Documents cités:
**EP-A1- 2 610 693     WO-A1-2006/019352**
**US-A1- 2013 022 475**

**Description**

**Domaine technique de l'invention**

La présente invention se rapporte à un procédé de commande pour minimiser l'énergie électrique consommée par un équipement de pompage lors du processus de remplissage ou de vidage d'un réservoir. L'invention concerne également le système de commande qui permet de mettre en oeuvre ce procédé.

**Etat de la technique**

Il existe un certain nombre de documents décrivant des solutions de minimisation de l'énergie consommée lors d'un processus de remplissage ou de vidage d'un réservoir.

Le brevet EP1725774B1 décrit une solution dans laquelle plusieurs pompes sont démarrées par séquence en fonction de l'évolution du niveau du liquide dans le réservoir. Chacune des pompes est démarrée à une vitesse optimale qui n'est pas réadaptée en fonction des conditions de remplissage ou de vidage du réservoir.

La demande de brevet EP2610693A1 décrit une méthode et un appareil pour minimiser l'énergie électrique consommée par un système de pompage associé à un réservoir. La méthode comporte notamment une étape d'identification permettant de déterminer les caractéristiques de la pompe et une étape permettant de déterminer une zone optimale de fonctionnement de la pompe. Cette solution ne tient pas compte d'un flux perturbateur qui est susceptible de modifier la zone optimale de fonctionnement de la pompe.

Le but de l'invention est de proposer un procédé de commande pour minimiser l'énergie électrique consommée par un équipement de pompage lors du processus de remplissage ou de vidage d'un réservoir, ledit procédé permettant d'économiser de l'énergie électrique sur toute la plage de fonctionnement de l'équipement de pompage et de faire fonctionner l'équipement de pompage à son point optimal.

**Exposé de l'invention**

Ce but est atteint par un procédé de commande selon la revendication 1.

Dans le cas d'un processus de remplissage du réservoir, la vitesse optimale s'exprime de la manière suivante :

$$\frac{\frac{d}{d\omega}\big(p(\omega, V)\big) \cdot \big(Q_{input}(\omega, V) - Q_c\big) - p(\omega, V) \cdot \frac{d}{d\omega}\big(Q_{input}(\omega, V)\big)}{\big(Q_{input}(\omega, V) - Q_c\big)^2} = g(V, \omega)$$

Dans laquelle :

- V représente le volume de liquide dans le réservoir,
- g représente une fonction de moyenne nulle en la variable V sur l'intervalle [0-Vmax],
- $\omega$ représente la vitesse de la pompe de l'équipement de pompage,
- $Q_{input}$ représente un flux de remplissage du réservoir,
- $Q_c$ représente le flux perturbateur,
- p représente la puissance instantanée consommée par l'équipement de pompage.

L'invention concerne également un système de commande selon la revendication 3.

Selon une particularité de l'invention, le flux perturbateur peut être obtenu par estimation à l'aide d'un module logiciel d'estimation.

**Brève description des figures**

D'autres caractéristiques et avantages vont apparaître dans la description détaillée qui suit faite en regard des dessins annexés dans lesquels :

- Les figures 1A et 1B représentent de manière schématique le principe de pompage d'un réservoir, respectivement pour le processus de remplissage du réservoir et pour le processus de vidage du réservoir,
- La figure 1C illustre l'expression de la pression statique d'un réservoir,
- La figure 2 représente de manière schématique un équipement de pompage comportant plusieurs cellules mono-pompe assemblées en parallèle,

- La figure 3 représente un synoptique illustrant le procédé de commande de l'invention,
- La figure 4 représente des courbes montrant la variation de la vitesse optimale de la pompe en fonction de la pression statique de la pompe et du flux perturbateur lors du processus de remplissage d'un réservoir,
- La figure 5 représente des courbes montrant la variation de la vitesse optimale d'une pompe en fonctionnement, de deux pompes en fonctionnement ou de trois pompes en fonctionnement, en fonction du flux perturbateur lors du processus de remplissage d'un réservoir,
- La figure 6 représente des courbes montrant la variation de l'énergie électrique optimale consommée pour une pompe en fonctionnement, deux pompes en fonctionnement ou trois pompes en fonctionnement, en fonction du flux perturbateur lors du processus de remplissage d'un réservoir.

**Description détaillée d'au moins un mode de réalisation**

L'invention est liée au processus de remplissage ou de vidage d'un réservoir R mis en oeuvre à l'aide d'un équipement de pompage EP. L'invention trouvera notamment une application dans le domaine du traitement des eaux usées ou du stockage d'eau potable.

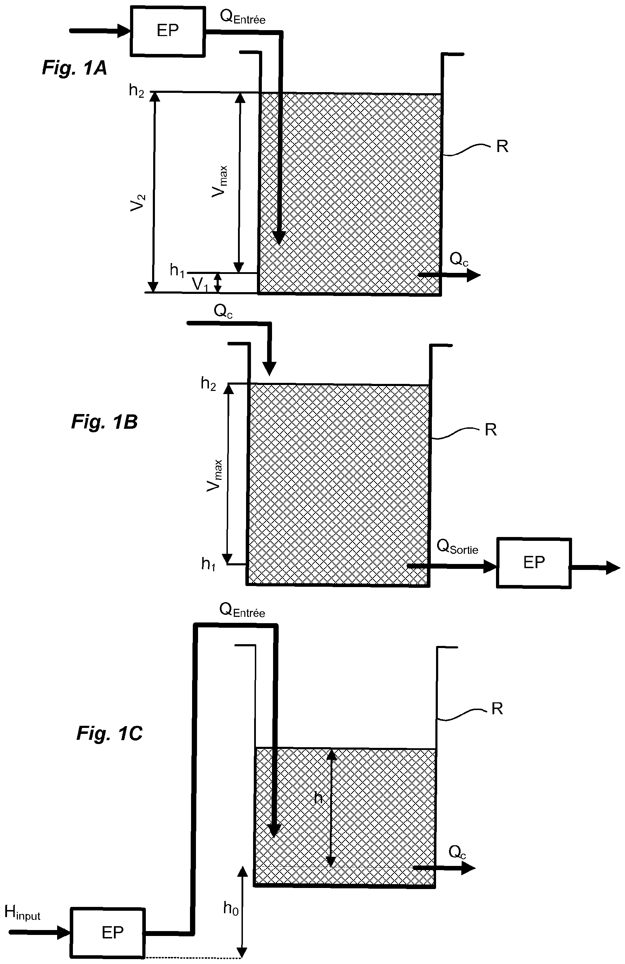

En référence à la figure 1A, le processus de remplissage d'un réservoir R consiste à générer, à l'aide de l'équipement de pompage EP, un flux de remplissage $Q_{input}$ d'un liquide vers l'intérieur du réservoir R. Un flux perturbateur $Q_c$ vidant le réservoir R vient perturber ce processus normal de remplissage.

En référence à la figure 1B, le processus de vidage d'un réservoir R consiste à générer, à l'aide de l'équipement de pompage EP, un flux de vidage $Q_{output}$ du liquide contenu dans le réservoir R. De même, un flux perturbateur $Q_c$ remplissant le réservoir vient perturber ce processus normal de vidage.

Dans le processus de remplissage, lorsque le niveau de liquide descend au-dessous d'une valeur limite basse $h_1$, l'équipement de pompage EP doit être activé pour remplir le réservoir jusqu'à ce que le niveau de liquide dépasse une valeur limite haute $h_2$.

Dans le processus de vidage, lorsque le niveau de liquide monte au-dessus de la valeur limite haute $h_2$, l'équipement de pompage EP est activé pour vider le réservoir jusqu'à ce que le niveau de liquide redescende au-dessous de la valeur limite basse $h_1$.

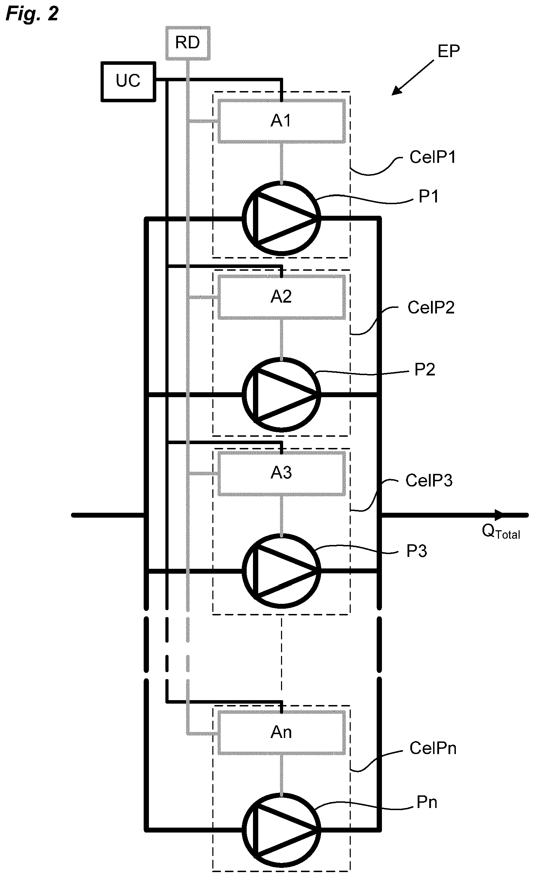

En référence à la figure 2, un équipement de pompage EP comporte une ou plusieurs cellules mono-pompe CelP1, CelP2,..., CelPn. Une cellule mono-pompe comporte une pompe P1, P2,.., Pn, un moteur électrique actionnant la pompe et un actionneur A1, A2,.. An commandant le moteur électrique. Sur la figure 2, le moteur électrique de chaque cellule mono-pompe est intégré à la pompe. L'actionneur peut être un variateur de vitesse, un démarreur, un contacteur ou tout autre dispositif de conversion de puissance permettant l'alimentation du moteur électrique. Dans le cadre de l'invention, afin de pouvoir faire varier la vitesse d'au moins une pompe, l'un au moins des actionneurs doit être constitué d'un variateur de vitesse.

Comme représenté sur la figure 2, l'équipement de pompage EP peut comporter plusieurs cellules mono-pompe connectées en parallèle sur le réseau de distribution électrique RD. L'ensemble des cellules mono-pompe génère un flux total $Q_{Total}$, correspondant au flux de remplissage ou au flux de vidage du réservoir R.

L'invention s'applique pour un équipement de pompage à une ou plusieurs cellules mono-pompe.

Un système de commande, associé à l'équipement de pompage EP, est agencé pour mettre en oeuvre le procédé de commande de l'invention. Ce système de commande comporte principalement :

- Des moyens de mesure ou d'estimation de la pression statique $H_{pump}$ de l'équipement de pompage EP,
- Des moyens de mesure ou d'estimation du flux perturbateur $Q_c$,
- Une unité de commande UC exécutant au moins un module logiciel pour déterminer la vitesse optimale $\omega_{opt}$ à appliquer à l'équipement de pompage pour minimiser l'énergie électrique consommée par cet équipement EP.

L'unité de commande UC, mettant en oeuvre le procédé de commande de l'invention, se charge de commander les actionneurs des cellules mono-pompe. Sur la figure 2, l'unité de commande UC est dissociée des cellules mono-pompe et est connectée à chaque actionneur des cellules mono-pompe afin de pouvoir leur envoyer des signaux de commande.

Le procédé de commande de l'invention, permettant de minimiser l'énergie électrique consommée par l'équipement de pompage EP, est explicité plus en détail ci-dessous.

L'énergie consommée dans le cas d'une cellule mono-pompe s'exprime par la relation (1) suivante :

$$\frac{dE_{MonoCell}}{dt} = P_{pump} + P_{MotorLosses} + P_{ActionneurLosses} \qquad (1)$$

Avec :

- $E_{MonoCell}$ : l'énergie consommée par une cellule mono-pompe [Wh],
- $P_{MotorLosses}$ : les pertes joules dans le moteur [W] de la cellule mono-pompe, qui dépendent du point de fonctionnement défini par la vitesse et la puissance de la pompe,
- $P_{ActionneurLosses}$ : les pertes joules dans l'actionneur [W] de la cellule mono-pompe, qui dépendent du point de fonctionnement défini par la vitesse et la puissance de la pompe,
- $P_{pump}$ : la puissance consommée par la pompe de la cellule mono-pompe [W], qui dépend du point de fonctionnement défini par la vitesse et le niveau de pression statique de l'équipement de pompage.

L'énergie globale consommée dans le cas d'un équipement de pompage à plusieurs cellules mono-pompe s'exprime alors par la relation (2) suivante :

$$\frac{dE}{dt} = p = \sum_1^M P_{pump} + \sum_1^M P_{MotorLosses} + \sum_1^M P_{ActionneurLosses} \qquad (2)$$

Avec :

- E : l'énergie consommée par l'équipement de pompage [Wh],
- p : la puissance instantanée consommée par l'équipement de pompage [W].

L'invention vise à déterminer en continu la vitesse optimale $\omega_{opt}$ à laquelle au moins une pompe de l'équipement de pompage EP doit tourner pour remplir et/ou vider le réservoir R tout en économisant l'énergie électrique consommée par l'équipement de pompage EP, quelles que soient la valeur du flux perturbateur $Q_c$ et celle de la pression statique appliquée $H_{pump}$ à cet équipement de pompage EP.

Le problème technique consiste donc à trouver la trajectoire en vitesse qui minimise l'énergie électrique consommée pour remplir ou vider le réservoir R.

Dans le cas du processus de remplissage d'un réservoir R, on a l'expression (3) suivante :

$$\frac{dV}{dt} = Q_{input}(\omega, H_{pump}) - Q_c \qquad (3)$$

Dans le cas du processus de vidage d'un réservoir R, on a l'expression (4) suivante :

$$\frac{dV}{dt} = Q_c - Q_{output}(\omega, H_{pump}) \qquad (4)$$

Avec :

- V : volume de liquide dans le réservoir [m³] ($V_{max}$ étant égal à $V_2$-$V_1$, la différence entre le volume à un niveau dit haut et le volume à un niveau dit bas),
- $Q_c$ : le flux perturbateur [m³/s],
- $Q_{input}$ : le flux de remplissage [m³/s] qui dépend de la vitesse $\omega$ de l'équipement de pompage et de la pression statique $H_{pump}$ de l'équipement de pompage,
- $Q_{output}$ : le flux de vidage [m³/s] qui dépend de la vitesse $\omega$ et de la pression statique $H_{pump}$ de l'équipement de pompage.

D'une manière générale, la hauteur de liquide dans le réservoir peut s'exprimer en fonction du volume contenu dans celui-ci. Pour la suite, nous prenons le cas d'un réservoir R symétrique, pour lequel la grandeur V (i.e. le volume) s'exprime de la manière suivante :

$$V = S.h \qquad (5)$$

Avec :

- h : la hauteur [m] de liquide dans le réservoir, les hauteurs h1, respectivement h2, correspondant aux volumes V1, respectivement V2,
- S : section du réservoir [$m^2$].

En référence à la figure 1C, la pression statique de l'équipement de pompage s'exprime en fonction de la hauteur de liquide dans le réservoir R :

$$H_{pump} = f(h) = H_0 - H_{input} + \rho \cdot g \cdot h \qquad (6)$$

ou

$$H_{pump} = f(V) = H_0 - H_{input} + \rho \cdot g \cdot \frac{V}{S} \qquad (7)$$

Avec :

- $H_0$ : la chute de pression due à la hauteur géométrique $h_0$ entre le point de pompage et l'installation de l'équipement de pompage [Pa], qui est une fonction de la hauteur géométrique $h_0$.
- $H_{input}$ : la pression à l'entrée de l'équipement de pompage [Pa],
- $\rho$ : la densité du fluide [$kg/m^3$],
- g : la gravité [$m/s^2$].

La démonstration qui suit est appliquée au processus de remplissage d'un réservoir R mais il faut comprendre qu'elle peut s'appliquer facilement au processus de vidage du réservoir, en inversant l'effet du flux perturbateur.

Les équations (2) et (3) ci-dessus peuvent se recombiner de la manière suivante :

$$\frac{dE}{dV} = E_v = \frac{p(\omega, H_{pump})}{Q_{input}(\omega, H_{pump}) - Q_c} \leftrightarrow \frac{dE}{dV} = E_v = \frac{p(\omega, V)}{Q_{input}(\omega, V) - Q_c} \qquad (8)$$

qui s'exprime comme ci-dessous en une fonction intégrale tenant compte de la variable du volume de liquide dans le réservoir :

$$E = \int_0^{V_{max}} E_v \, dV \qquad (9)$$

Avec la fonction $Q_{input}(\omega, V)$ qui s'exprime de la manière suivante dans le cas d'un équipement de pompage EP à plusieurs cellules mono-pompe :

$$Q_{input}(\omega, V) = Q_{Total}(\omega, V) = \sum_{i=1}^{M} Q_{pump\_i}(\omega_i, V) \qquad (10)$$

L'objectif est de minimiser l'énergie globale E lors du processus de remplissage ou de vidage, qui se traduit par annuler la dérivée partielle de la fonction énergie par rapport à la variable vitesse.

$$\frac{dE}{d\omega} = \int_0^{V_{max}} \frac{dE_v}{d\omega} dV = 0 \qquad (11)$$

Cette solution générale peut s'exprimer par une fonction périodique g de manière à ce que :

$$\frac{dE_v}{d\omega} = g(V, \omega), \qquad \text{telle que} \qquad \int_0^{V_{max}} g(V, \omega)\, dV = 0 \qquad (12)$$

avec

$$\frac{dE_v}{d\omega} = \frac{d}{d\omega}\left(\frac{p(\omega, V)}{Q_{input}(\omega, V) - Q_c}\right)$$

$$\frac{dE_v}{d\omega} = \frac{\frac{d}{d\omega}\big(p(\omega, V)\big) \cdot \big(Q_{input}(\omega, V) - Q_c\big) - p(\omega, V) \cdot \frac{d}{d\omega}\big(Q_{input}(\omega, V)\big)}{\big(Q_{input}(\omega, V) - Q_c\big)^2}$$

La solution générale consiste à trouver la trajectoire $\omega = f(V)$ vérifiant la relation (12) :

$$\frac{\frac{d}{d\omega}\big(p(\omega, V)\big) \cdot \big(Q_{input}(\omega, V) - Q_c\big) - p(\omega, V) \cdot \frac{d}{d\omega}\big(Q_{input}(\omega, V)\big)}{\big(Q_{input}(\omega, V) - Q_c\big)^2} = g(V, \omega) \qquad (13)$$

Une solution particulière de (13) consiste à minimiser l'énergie volumique consommée $E_v$ lors du processus de remplissage ou de vidage d'un volume défini par $V_{max}$ ; c'est-à-dire à considérer $g(V,\omega) = 0$.

Cela revient à dire que pour une pression statique de la pompe $H_{pump}$ (i.e un volume donné), on cherche à annuler le terme suivant :

$$\frac{dE_v}{d\omega} = 0$$

Si on note $p'(\omega, V) = \frac{d}{d\omega}\big(p(\omega, V)\big)$ et $Q_{input}{}'(\omega, V) = \frac{d}{d\omega}\big(Q_{input}(\omega, V)\big)$, il vient qu'une solution au problème de minimisation de l'énergie électrique consommée est définie par la formule implicite ci-dessous, issue de (13) :

$$p'(\omega_{opt}, V) \cdot \big(Q_{input}(\omega_{opt}, V) - Q_c\big) - p(\omega_{opt}, V) \cdot Q_{input}{}'(\omega_{opt}, V) = 0$$

La vitesse $\omega$ permettant l'annulation de ce terme correspond à la vitesse optimale $\omega_{opt}$ à laquelle la pompe doit tourner pour remplir le réservoir tout en consommant moins d'énergie.

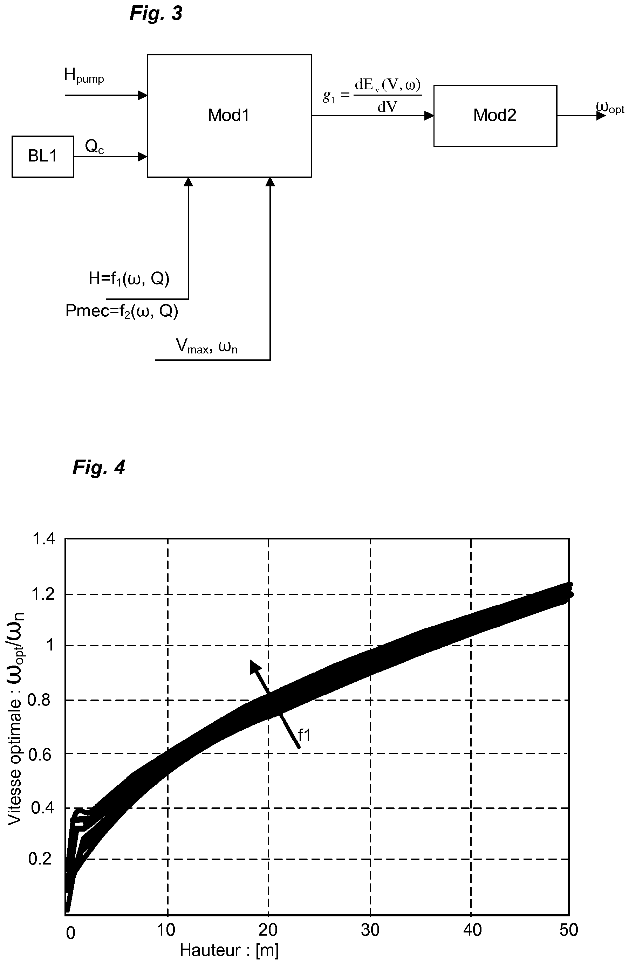

La figure 3 représente de manière schématique le procédé de commande mis en oeuvre dans l'unité de commande UC pour déterminer la vitesse optimale à appliquer à l'équipement de pompage EP pour minimiser l'énergie électrique consommée.

Pour commander l'équipement de pompage EP, l'unité de commande UC reçoit en entrée :

- La valeur de la pression statique $H_{pump}$ de l'équipement de pompage EP mesurée par les moyens de mesure,
- La valeur du flux perturbateur $Q_c$ mesurée par les moyens de mesure ou estimée à l'aide d'un estimateur,
- Les caractéristiques connues de l'équipement de pompage EP, notamment les courbes de pompe $f_1$ et $f_2$, c'est-à-dire l'expression de la pression et de la puissance mécanique développée par chaque pompe en fonction de sa vitesse et du flux généré,
- Les données de l'application, par exemple le volume V de liquide dans le réservoir R, la section S du réservoir R et la hauteur maximale $h_{max}$, la vitesse nominale $\omega_n$ de chaque pompe.

Les fonctions $f_1$ et $f_2$ définissent les courbes caractéristiques de la pompe ($H = f_1(\omega, Q)$ et $Pmec = f_2(\omega, Q)$). Elles peuvent être soit des fonctions d'interpolation analytiques, soit des tables de données numériques. La fonction $g_1$ exprime l'énergie volumique consommée sur toute la plage de variation de la vitesse (de zéro à la vitesse nominale $\omega_n$) de la pompe et, pour l'ensemble des volumes de liquide contenu dans le réservoir; elle peut être définie comme une fonction de ces deux variables ou une table de données numériques. Elle est déterminée par un premier module de calcul Mod1 de l'unité de commande à partir des données décrites ci-dessus.

Ensuite, l'unité de commande exécute un module de détermination Mod2 de la vitesse optimale $\omega_{opt}$ à appliquer à l'équipement de pompage EP qui permet de minimiser l'énergie électrique consommée par l'équipement de pompage EP lors du processus de remplissage ou de vidage du réservoir R pour une valeur $H_{pump}$ donnée. Ce module de détermination Mod2 détermine la vitesse optimale $\omega_{opt}$ qui vérifie la relation (13) décrite ci-dessus.

Le bloc BL1 peut être soit un moyen de mesure, soit un estimateur du flux perturbateur $Q_c$.

Un exemple d'estimateur du flux perturbateur est donné par le système suivant :

$$\frac{d\widehat{V}}{dt} = Q_{input}(\omega, H_{pump}) - \widehat{Q}_c - K_1 \cdot (\widehat{V} - V)$$

$$\frac{d\widehat{Q}_c}{dt} = -K_2 \cdot (\widehat{V} - V)$$

où V et $Q_{input}(\omega, H_{pump})$ sont les variables connues et $\widehat{V}$ et $\widehat{Q}_c$ sont des données estimées.

Pour mieux comprendre l'invention, nous traitons deux exemples ci-dessous. Dans un premier exemple on choisit :

○ Un flux perturbateur nul ($Q_c = 0$),
○ Un équipement de pompage à une cellule mono-pompe (pompe désignée pump_1),

■ La relation (10) devient : $Q_{input}(\omega, V) = Q_{pump\_1}(\omega_1, V)$

○ De négliger les pertes des actionneurs et des moteurs électriques.

■ La relation (2) devient : $p(\omega, V) = P_{pump\_1}$.

Optimiser l'énergie de remplissage revient à résoudre la relation (13) :

$$p'(\omega_{opt}, V) \cdot Q_{pump\_1}(\omega_{opt}, V) - p(\omega_{opt}, V) \cdot Q_{pump\_1}{}'(\omega_{opt}, V) = 0$$

ce qui est équivalent à :

$$\frac{d}{d\omega}\left(\frac{p(\omega, V)}{Q_{pump\_1}(\omega, V)}\right) = 0$$

ou encore à :

$$H_{pump\_1}(V)\frac{d}{d\omega}\left(\frac{p(\omega, V)}{H_{pump\_1}(V) \cdot Q_{pump\_1}(\omega, V)}\right) = 0$$

Par définition, le rendement de la pompe est défini par le ratio :

$$\eta(\omega, V) = \frac{H_{pump\_1}(V) \cdot Q_{pump\_1}(\omega, V)}{p(\omega, V)}$$

La vitesse optimale est alors définie par la relation suivante :

$$\frac{d}{d\omega}(\eta(\omega, V)) = 0$$

Le point efficacité optimale à vitesse nominale ($\omega_n$,$H_{BEP}$,$Q_{BEP}$) est solution de cette équation. Les lois d'affinités permettent d'étendre la solution et la vitesse optimale s'exprime alors de la manière suivante :

$$\omega_{opt} = \omega_n \cdot \sqrt{\frac{H_{pump\_1}}{H_{BEP}}}$$

Avec :

- $\omega_{opt}$ : la vitesse optimale à laquelle la pompe doit tourner pour une pression statique $H_{pump}$ donnée,
- $\omega_n$ : la vitesse nominale de la pompe,
- $H_{pump\_1}$ : la pression statique de la pompe,
- $H_{BEP}$ : la pression statique correspondant au point de fonctionnement optimal (rendement maximal) à la vitesse nominale.

Dans un second exemple on choisit :

- Un flux perturbateur non nul,
- Un équipement de pompage à N cellules mono-pompe, dans lesquelles les N actionneurs sont identiques et les N pompes sont identiques, tournant à la même vitesse,

  - La relation (10) devient: $Q_{input}(\omega, V) = \sum_{i=1}^{N} Q_{pump\_i}(\omega_i, V) = N\,Q_{pump}(\omega_i, V)$

- De négliger les pertes des actionneurs et des moteurs électriques.

  - La relation (2) devient: $p(\omega, V) = \sum_{i=1}^{N} P_{pump\_i}(\omega_i, V) = N\,P_{pump}(\omega_i, V)$

Cela revient à résoudre la relation (13) écrite ci-dessus :

$$p'(\omega_{opt}, V) \cdot \big(Q_{input}(\omega_{opt}, V) - Q_c\big) - p(\omega_{opt}, V) \cdot Q_{input}'(\omega_{opt}, V) = 0$$

qui est équivalente à :

$$\frac{d}{d\omega}\left(\frac{N\,P_{pump}(\omega, V)}{N\,Q_{pump}(\omega, V) - Q_c}\right) = 0$$

ou à :

$$\frac{d}{d\omega}\left(\frac{P_{pump}(\omega, V)}{Q_{pump}(\omega, V) - \frac{Q_c}{N}}\right) = 0$$

C'est-à-dire que le flux perturbateur influence le système multi-pompes inversement proportionnellement au nombre de pompes.

On en déduit que l'énergie globale consommée par N pompes équivaut à celle consommée par une seule pompe à $Q_{ceq} = Q_c / N$.

En introduisant l'expression de l'efficacité de la pompe, nous obtenons la relation suivante :

$$\frac{d}{d\omega}\left(\frac{1}{\eta(\omega, V)}\frac{Q_{pump}(\omega, V)}{Q_{pump}(\omega, V) - \frac{Q_c}{N}}\right) = 0$$

Qui conduit à l'expression suivante :

$$\frac{d}{d\omega}\big(\eta(\omega, V)\big) = -\eta(\omega, V)\frac{\frac{d}{d\omega}\big(Q_{pump}(\omega, V)\big)}{Q_{pump}(\omega, V)}\frac{\frac{Q_c}{3}}{Q_{pump}(\omega, V) - \frac{Q_c}{N}}$$

montrant que l'optimal du système de pompage est atteint sur un point qui n'est pas l'optimal $\big(\frac{d}{d\omega}\big(\eta(\omega, V)\big) = 0\big)$ de chaque pompe prise individuellement.

La vitesse optimale est obtenue en résolvant la relation suivante :

$$p'(\omega_{opt}, V)\Big(Q_{pump}(\omega_{opt}, V) - \frac{Q_c}{N}\Big) - p(\omega_{opt}, V).Q_{pump}'(\omega_{opt}, V) = 0$$

Connaissant les expressions :

- De la puissance d'une pompe en fonction de son volume, ie de sa pression, et de sa vitesse,
- Du débit d'une pompe en fonction de son volume, ie de sa pression, et de sa vitesse,
- Du flux perturbateur,

il est possible de calculer l'expression suivante :

$$p'(\omega_{opt}, V)\Big(Q_{pump}(\omega_{opt}, V) - \frac{Q_c}{N}\Big) - p(\omega_{opt}, V).Q_{pump}'(\omega_{opt}, V)$$

La solution s'obtient en trouvant la vitesse qui annule cette expression.

A partir de ce deuxième exemple, on obtient alors la figure 4 qui montre plusieurs courbes exprimant la variation de la vitesse optimale $\omega_{opt}$ en fonction de la hauteur (c'est-à-dire de la pression statique de la pompe), chaque courbe étant obtenue à un flux perturbateur $Q_c$ déterminé. La flèche f1 est représentative d'une augmentation du flux perturbateur $Q_c$. On remarque sur cette figure 4 qu'une augmentation du flux perturbateur $Q_c$ nécessite un réajustement de la vitesse optimale. La prise en compte du flux perturbateur est donc nécessaire pour minimiser l'énergie électrique consommée par l'équipement de pompage.

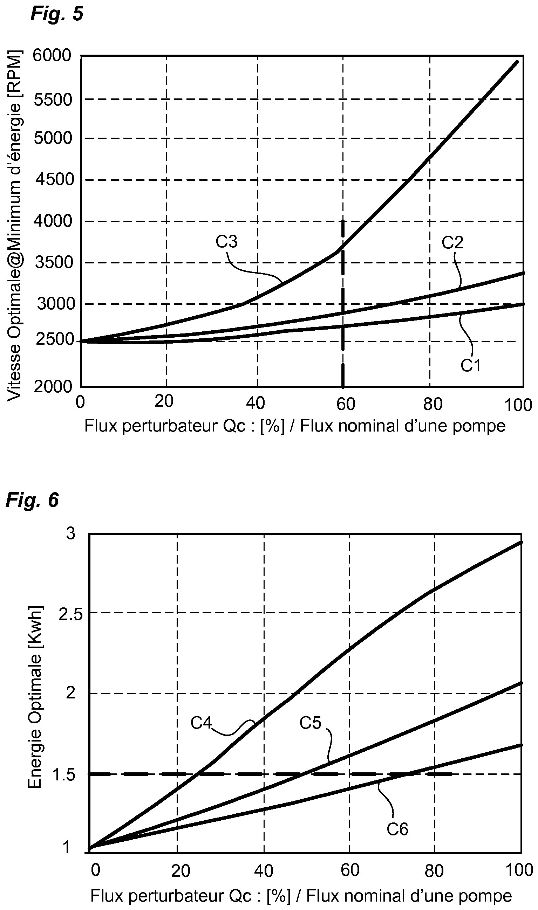

Pour une pression statique $H_{pump}$ (c'est-à-dire un volume) donnée, les figures 5 et 6 donnent, respectivement, la vitesse optimale et l'énergie consommée en fonction du flux perturbateur $Q_c$ dans le cas d'une seule pompe, de deux pompes et de trois pompes.

On remarque sur les figures 5 et 6 que, pour un même flux perturbateur $Q_c$, il est plus intéressant de faire fonctionner trois pompes à une vitesse optimale basse qu'une seule pompe à une vitesse optimale plus élevée. Par exemple, sur la figure 5, pour un flux perturbateur à 60% du flux nominal d'une pompe, l'actionnement de trois pompes (courbe C1) à la vitesse optimale d'environ 2700 tours par minute (RPM) fera consommer moins d'énergie électrique que l'actionnement de deux pompes (courbe C2) à une vitesse d'environ 2800 tours par minute et moins d'énergie électrique que l'actionnement d'une seule pompe (courbe C3) à la vitesse optimale de 4700 tours par minute.

Par exemple, sur la figure 6, la consommation d'une énergie électrique de 1,5Kwh permet de gérer un flux perturbateur de 25% si une seule pompe est employée (courbe C4), un flux perturbateur de 50% si deux pompes sont employées (courbe C5) et un flux perturbateur de 75% si trois pompes (courbe C6) sont employées. Cela justifie l'intérêt de l'actionnement de plusieurs pompes à la vitesse optimale en vue de minimiser l'énergie électrique consommée.

## Revendications

**1.** Procédé de commande pour minimiser l'énergie électrique consommée lors d'un processus de remplissage ou de vidage d'un réservoir (R), ledit processus de remplissage ou de vidage du réservoir étant mis en oeuvre à l'aide d'un équipement de pompage (EP) qui comporte au moins une pompe, un moteur électrique actionnant ladite pompe et un actionneur commandant ledit moteur électrique, ledit processus de remplissage ou de vidage étant réalisé en présence d'un flux perturbateur (Qc) vidant le réservoir ou respectivement remplissant le réservoir, ledit procédé consistant à déterminer une vitesse optimale (ωopt) de l'équipement de pompage minimisant une énergie volumique ($E_v$) consommée par l'équipement de pompage lors du processus de remplissage ou de vidage du réservoir (R), ledit procédé étant **caractérisé en ce que** ladite énergie volumique est fonction :

- du flux ($Q_{input}$) de remplissage instantané du réservoir produit par l'équipement de pompage ou du flux ($Q_{output}$) de vidage instantané du réservoir produit par l'équipement de pompage,
- du flux perturbateur ($Q_c$),
- du volume (V) de liquide dans le réservoir, ledit volume étant variable dans le temps en fonction dudit flux de remplissage instantané ou dudit flux de vidage instantané, et dudit flux perturbateur,
- de la puissance instantanée (p) consommée par l'équipement de pompage.

2. Procédé selon la revendication 1, **caractérisé en ce qu'**il comporte une étape de détermination par estimation du flux perturbateur.

3. Système de commande d'un équipement de pompage permettant de minimiser l'énergie électrique consommée lors d'un processus de remplissage ou de vidage d'un réservoir, ledit équipement comportant au moins une pompe, un moteur électrique actionnant ladite pompe et un actionneur commandant ledit moteur électrique, ledit processus de remplissage ou de vidage étant réalisé en présence d'un flux perturbateur vidant le réservoir ou respectivement remplissant le réservoir, ledit système étant **caractérisé en ce qu'**il comporte une unité de commande (UC) comportant un module de détermination (Mod2) d'une vitesse optimale (ωopt) de l'équipement de pompage minimisant une énergie volumique consommée par l'équipement de pompage lors du processus de remplissage ou de vidage du réservoir (R), ladite énergie volumique étant fonction :

- du flux ($Q_{input}$) de remplissage instantané du réservoir produit par l'équipement de pompage ou du flux ($Q_{output}$) de vidage instantané du réservoir produit par l'équipement de pompage,
- du flux perturbateur ($Q_c$),
- du volume (V) de liquide dans le réservoir, ledit volume étant variable dans le temps en fonction dudit flux de remplissage instantané ou dudit flux de vidage instantané, et dudit flux perturbateur,
- de la puissance instantanée (p) consommée par l'équipement de pompage.

4. Système selon la revendication 3, **caractérisé en ce que** l'unité de commande comporte un module estimateur du flux perturbateur.

**Patentansprüche**

1. Steuerungsverfahren zur Minimierung der elektrischen Energie, die bei einem Füllungs- oder Leerungsprozess eines Behälters (R) verbraucht wird, wobei der Füllungs- oder Leerungsprozess des Behälters mithilfe einer Pumpenanlage (EP) umgesetzt wird, die mindestens eine Pumpe, einen Elektromotor, der die Pumpe antreibt, und einen Betätiger, der den Elektromotor steuert, aufweist, wobei der Füllungs- oder Leerungsprozess unter Vorhandensein eines Störflusses (Qc) durchgeführt wird, der den Behälter leert bzw. füllt, wobei das Verfahren darin besteht, eine optimale Geschwindigkeit (wopt) der Pumpenanlage zu bestimmen, die eine Volumenenergie ($E_v$) minimiert, die von der Pumpenanlage bei dem Füllungs- oder Leerungsprozess des Behälters (R) verbraucht wird, wobei das Verfahren **dadurch gekennzeichnet ist, dass** die Volumenenergie von Folgendem abhängt:

- dem momentanen Füllungsfluss ($Q_{input}$) des Behälters, der von der Pumpenanlage erzeugt wird, oder dem momentanen Leerungsfluss ($Q_{output}$) des Behälters, der von der Pumpenanlage erzeugt wird,
- dem Störfluss ($Q_c$),
- dem Flüssigkeitsvolumen (V) in dem Behälter, wobei das Volumen in Abhängigkeit von dem momentanen Füllungsfluss oder von dem momentanen Leerungsfluss und dem Störfluss zeitlich variabel ist,
- der momentanen Leistung (p), die von der Pumpenanlage verbraucht wird.

2. Verfahren nach Anspruch 1, **dadurch gekennzeichnet, dass** es einen Schritt des Bestimmens durch Schätzen des Störflusses umfasst.

3. Steuerungssystem einer Pumpenanlage, das es erlaubt, die elektrische Energie zu minimieren, die bei einem Füllungs- oder Leerungsprozess eines Behälters verbraucht wird, wobei die Anlage mindestens eine Pumpe, einen Elektromotor, der die Pumpe antreibt, und einen Betätiger, der den Elektromotor steuert, aufweist, wobei der Füllungs- oder Leerungsprozess unter Vorhandensein eines Störflusses durchgeführt wird, der den Behälter leert bzw. füllt, wobei das System **dadurch gekennzeichnet ist, dass** es eine Steuerungseinheit (UC) aufweist, die ein Modul zur Bestimmung (Mod2) einer optimalen Geschwindigkeit (wopt) der Pumpenanlage aufweist, die eine Volumenenergie minimiert, die von der Pumpenanlage bei dem Füllungs- oder Leerungsprozess des Behälters (R) verbraucht wird, wobei die Volumenenergie von Folgendem abhängt:

- dem momentanen Füllungsfluss ($Q_{input}$) des Behälters, der von der Pumpenanlage erzeugt wird, oder dem momentanen Leerungsfluss ($Q_{output}$) des Behälters, der von der Pumpenanlage erzeugt wird,
- dem Störfluss ($Q_c$),
- dem Flüssigkeitsvolumen (V) in dem Behälter, wobei das Volumen in Abhängigkeit von dem momentanen Füllungsfluss oder von dem momentanen Leerungsfluss und dem Störfluss zeitlich variabel ist,
- der momentanen Leistung (p), die von der Pumpenanlage verbraucht wird.

4. System nach Anspruch 3, **dadurch gekennzeichnet, dass** die Steuerungseinheit ein Modul aufweist, das den Störfluss schätzt.


**Claims**

1. Control method for minimizing the electrical energy consumed during a process of filling or draining a tank (R), said process of filling or draining the tank being implemented using a pumping equipment item (EP) which comprises at least one pump, one electric motor actuating said pump and one actuator controlling said electric motor, said filling or draining process being performed in the presence of a disturbing flow ($Q_c$) draining the tank or respectively filling the tank, said method consisting in determining an optimum speed (ωopt) of the pumping equipment item that minimizes a volume energy (Ev) consumed by the pumping equipment item during the process of filling or draining the tank (R), said method being **characterized in that** said volume energy is a function:

- of the instantaneous tank filling flow ($Q_{input}$) produced by the pumping equipment item or the instantaneous tank draining flow ($Q_{output}$) produced by the pumping equipment item,
- of the disturbing flow ($Q_c$),
- of the volume (V) of liquid in the tank, said volume being variable in time as a function of said instantaneous filling flow or said instantaneous draining flow, and said disturbing flow,
- of the instantaneous power (p) consumed by the pumping equipment item.

2. Method according to Claim 1, **characterized in that** it comprises a step of determining the disturbing flow by estimation.

3. Control system for a pumping equipment item that makes it possible to minimize the electrical energy consumed during a process of filling or draining a tank, said equipment item comprising at least one pump, one electric motor actuating said pump and one actuator controlling said electric motor, said filling or draining process being performed in the presence of a disturbing flow draining the tank or respectively filling the tank, said system being **characterized in that** it comprises a control unit (UC) comprising a module (Mod2) for determining an optimum speed (ωopt) of the pumping equipment item that minimizes a volume energy consumed by the pumping equipment item during the process of filling or draining the tank (R), said volume energy being a function:

- of the instantaneous tank filling flow ($Q_{input}$) produced by the pumping equipment item or the instantaneous tank draining flow ($Q_{output}$) produced by the pumping equipment item,
- of the disturbing flow ($Q_c$),
- of the volume (V) of liquid in the tank, said volume being variable in time as a function of said instantaneous filling flow or said instantaneous draining flow, and said disturbing flow,
- of the instantaneous power (p) consumed by the pumping equipment item.

4. System according to Claim 3, **characterized in that** the control unit comprises a module for estimating the disturbing flow.

*Fig. 1A*

$Q_{Entrée}$

EP

$h_2$

$V_2$

$V_{max}$

R

$h_1$

$V_1$

$Q_c$

*Fig. 1B*

$Q_c$

$h_2$

$V_{max}$

R

$h_1$

$Q_{Sortie}$

EP

$Q_{Entrée}$

*Fig. 1C*

R

h

$Q_c$

$H_{input}$

EP

$h_0$

**Fig. 2**

**Fig. 3**

**Fig. 4**

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1725774 B1

- EP 2610693 A1